# EUROPEAN PATENT SPECIFICATION

(11) **EP 4 481 922 B1**
(45) Date of publication and mention of the grant of the patent: **03.06.2026**
(21) Application number: 24182917.5
(22) Date of filing: 18.06.2024
(51) Int. Cl.: H01M 50/308, H01M 50/325, H01M 50/333

(54) **VALVE ASSEMBLY FOR A BATTERY ENCLOSURE**
VENTILANORDNUNG FÜR EIN BATTERIEGEHÄUSE
ENSEMBLE SOUPAPE POUR ENCEINTE DE BATTERIE

(30) Priority: 19.06.2023 US 202363521781 P; 26.06.2023 US 202363523186 P; 15.12.2023 US 202363610724 P; 12.02.2024 US 202463552333 P; 10.06.2024 US 202418738542
(43) Date of publication of application: 25.12.2024
(73) Proprietor: Illinois Tool Works Inc., Glenview IL 60025 (US)
(72) Inventor: SHUKLA, Umang, Glenview, 60025 (US); DOBSON, Kenneth, Glenview, 60025 (US); PRYMULA, David A., Glenview, 60025 (US); KOFLER, Thomas J., Glenview, 60025 (US); BENNETT, Daniel, Glenview, 60025 (US)
(74) Representative: HGF

(56) References cited:
- CN-A- 113 346 189
- JP-A- 2023 018 341

## Description

### CROSS REFERENCE TO RELATED APPLICATIONS

The present application claims priority to and the benefit of U.S. Application No. 63/521781, filed on June 19, 2023, U.S. Application No. 63/523,186, filed on June 26, 2023, U.S. Application No. 63/610724, filed on December 15, 2023, and U.S. Application No. 63/552,333, filed on February 12, 2023.

### FIELD OF EMBODIMENTS OF THE DISCLOSURE

The present disclosure relates to a valve assembly for an electric battery pack and, more specifically, to a valve assembly for a battery enclosure of an electric vehicle.

### BACKGROUND

In the field of electrical battery enclosures for electric vehicles, batteries require protection from harsh external conditions, including vibration, corrosive environments, fluids, dirt, debris, temperature fluctuations, and other potentially harmful conditions. As well, battery enclosures experience fluctuations in temperature and pressure internally due to the composition, operation, and containment of batteries. As a result of such a variation in internal conditions, battery enclosures require venting for proper operation and maintenance. Thus, battery enclosures require venting mechanisms that afford protection from the external conditions and regulation of the internal conditions. Reference is made to document JP2023018341 that discloses a valve assembly according to the preamble of claim 1, and to document

CN113346189.

### SUMMARY

Embodiments of the present disclosure generally relate to a valve assembly for a battery pack to provide venting functionality, as well ingress and egress protection.

In some aspects, a valve assembly for a battery pack includes a body having a flange extending from an outer sidewall at a first end, an inner sidewall that defines a chamber, and a plate disposed between the first end and a second end. The plate includes a plurality of slots formed therethrough. The valve assembly further includes a valve element that is operably coupled to the first end of the body, a sealing element that is disposed between a portion of the valve element and the body, a retainer, and a biasing element. The body is a unitary component formed of a metal material. The retainer is centrally disposed in the body and is configured to connect the valve element with the body.

In some embodiments, the valve assembly includes a membrane attached to at least one of the retainer or the body. The membrane is configured to provide passive pressure relief when the valve element is in a closed position. In some embodiments, the membrane is coupled to a head of the retainer proximate the second end of the body and at least partially covers a channel formed through the retainer. In some embodiments, the membrane is coupled to a foot of the retainer proximate the first end of the body and at least partially covers a channel formed through the retainer.

In some embodiments, the membrane is secured to the retainer by an annular clip. In some embodiments, the membrane is disposed around a plurality of apertures formed through the inner sidewall of the body, the membrane being arranged within a gap that is in fluid communication with the chamber of the body.

In some aspects, a valve assembly for a battery pack includes a body that includes a first end that is opposite a second end and defines a central axis therethrough, a valve element having a rim that is operably coupled to the first end of the body, and a barrel that extends toward the second end of the body, the valve element and the body being coaxially aligned along the central axis. In addition, the valve assembly includes a retainer that extends through the barrel and couples the valve element to the body. The body includes a plurality of slots that are selectively opened or closed by displacement of the valve element relative to the first end of the body.

In some embodiments, the body includes a plurality of tabs arranged on an outer sidewall, each tab extending outwardly from the outer sidewall relative to the central axis. In some embodiments, each tab has a hinge portion about which the tab is configured to be rotated during installation of the body with a pack wall of the battery back. In some embodiments, a plurality of tabs are integrally formed with the body as a unitary structure.

In some embodiments, the plurality of slots vary in size relative to one another. In some embodiments, the plurality of slots are spaced radially about the central axis. In some embodiments, the body includes an inner sidewall that defines a chamber, an annular gap between an outer sidewall and the inner sidewall, and a stem that is configured to guide the barrel of the valve element during operation, and the body is integrally formed as a unitary structure. In some embodiments, a biasing element is connected to the retainer to have a tension preload that is set by axially compressing the retainer.

In some aspects, a valve assembly for a battery pack includes a body that defines a central axis, the body including a first end that is opposite a second end, a plate that is disposed between the first end and the second end, a plurality of slots that are formed through the plate, and a stem that is centrally disposed on the plate. The valve assembly further includes a valve element that is operably attached to the first end of the body, the valve element having a barrel that extends toward the second of the body. Further, the valve assembly includes a retainer that has a shaft disposed within the barrel of the valve element, the shaft connecting a head to a foot of the retainer. A biasing element is operably coupled between the head of the retainer and a seat formed on the stem, and the barrel of the valve element abuts the head of the retainer.

In some embodiments, a seal is disposed between an inner rim of the body and a portion of the valve element. In some embodiments, the seal is configured to be retained on the inner rim of the body, such that the valve element moves relative to the seal during operation. In some embodiments, the seal is configured to be retained on the valve element, such that the seal moves relative to the body during operation. In some embodiments, an insulator is configured to be disposed between the body and a pack wall of the battery pack. In some embodiments, a seal is disposed between the valve element and the foot of the retainer.

### DESCRIPTION OF THE DRAWINGS

FIG. 1 is a perspective view of a front and side of a valve assembly having a body, valve element, and a retainer, according to an embodiment of the present disclosure;
FIG. 2 is a perspective view of a rear and side of the valve assembly of FIG. 1;
FIG. 3 is a rear view of the valve assembly of FIG. 1;
FIG. 4 is a side elevational view of the valve assembly of FIG. 1;
FIG. 5 is a sectional view of the valve assembly of FIG. 1, taken along the line 5-5 of FIG. 3;
FIG. 6 is a sectional view of another embodiment of a valve assembly of the present disclosure;
FIG. 7 is a perspective view of a rear and side of another embodiment of a body for a valve assembly of the present disclosure;
FIG. 8 is a rear view of the body of FIG. 8;
FIG. 9 is a sectional view of the body of FIG. 8, taken along the line 9-9 of FIG. 8;
FIGS. 10 and 11 are sectional views of a forming method for the retainer of the valve assembly, according to an embodiment of the present disclosure;
FIG. 12 is another embodiment of a retainer the valve assembly of the present disclosure;
FIG. 13 is another embodiment of a valve assembly of the present disclosure;
FIGS. 14-17 depict schematic representations of various embodiments of a seal and an inner rim of a body for use with embodiments of the valve assembly of the present disclosure;
FIGS. 18-22 depict schematic representations of various embodiments of an auxiliary seal for use with embodiments of the valve assembly of the present disclosure;
FIGS. 23-28 depict schematic representations of various embodiments of retention features for use with embodiments of the valve assembly of the present disclosure;
FIG. 29 is a schematic representation of an embodiment of a cork and a retainer for use with embodiments of the valve assembly of the present disclosure;
FIG. 30 is a schematic representation of a foot and tertiary seal for use with embodiments of the valve assembly of the present disclosure;
FIG. 31 is a schematic representation of an ancillary seal and groove for use with embodiment of the valve assembly of the present disclosure;
FIG. 32 is a partial, detail view of a clip mounted on a head of the retainer, according to embodiments of the present disclosure;
FIG. 33 is a partial, detail view of a clip mounted on a foot of the retainer, according to embodiments of the present disclosure;
FIGS. 34 and 35 depict schematic representations of an insulator for use with embodiments of the valve assembly of the present disclosure; and
FIGS. 36-38 depict another embodiment of an insulator for use with embodiments of the valve assembly of the present disclosure.

### DETAILED DESCRIPTION

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Throughout the disclosure, the terms "about" and "approximately" mean plus or minus 5% of the number that each term precedes.

Embodiments of the present disclosure provide for a valve assembly associated with a battery pack to provide venting or degassing functionalities and to prevent the ingress of dirt, debris, or other fluids into the battery pack. In some aspects, the valve assembly affords for passive venting and active venting functionalities, and may be sized or configured to prevent or mitigate thermal runaways. Further, the valve assembly of the present disclosure is formed to withstand noise, vibration, and harshness associated with automotive vehicle implementations, or the like. To that end, the valve assembly is made from robust and durable materials, such as metals or metallic alloys or composites. The metal or metallic alloy surfaces may be coated for further advantages or performance, such as to resist corrosion or insulate dissimilar metals. By forming each of the components of the valve assembly of metal or metallic alloy materials, including the body, the valve element, and the retainer, the components can withstand high temperatures (e.g., about 300 degrees Celsius or higher) to delay or avoid complete dissolution that can lead to a greater sized opening through the battery pack, such as during a thermal runaway event. This can also permit the valve assembly to be compliant with various performance requirements, such as those in some jurisdictions requiring that the valve assembly delay a thermal runaway event by several minutes, e.g., five minutes or more.

In some aspects, the valve assembly, or components thereof, are formed using drawing, deep drawing, stamping, punching, casting, forging, or other suitable manufacturing processes. It will be appreciated that drawing and deep drawing techniques minimizes waste or excess material, avoids seams, joints, or areas prone to defects or failure, and provides a finished component with a robust grain structure which is more durable and of higher quality as compared with components formed by other convention manufacturing methods.

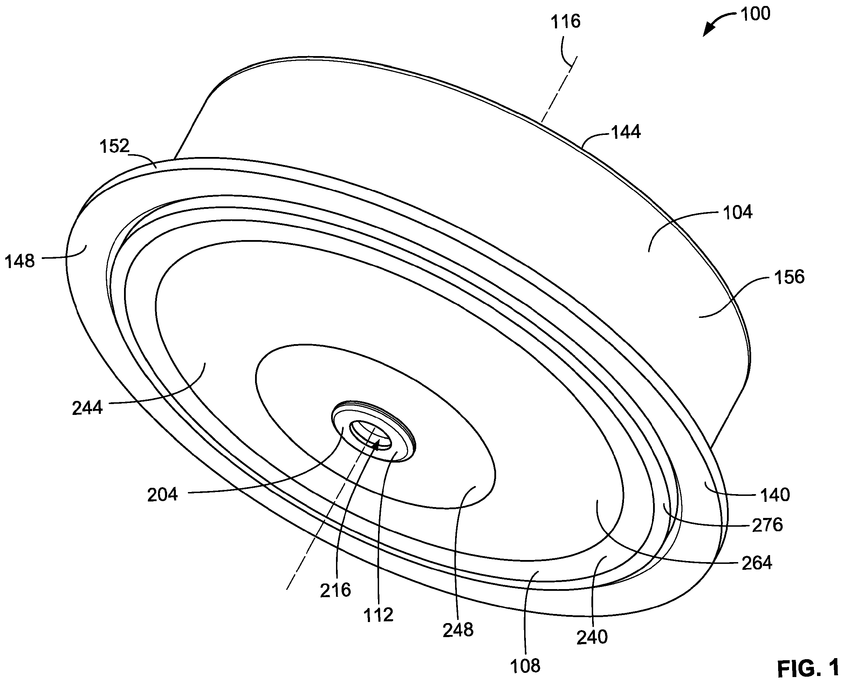

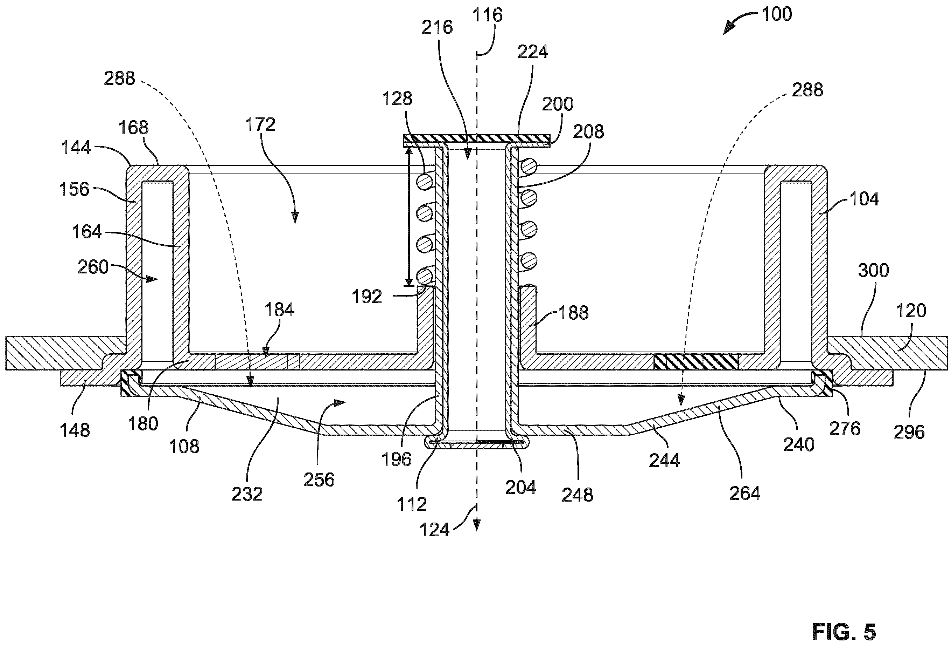

FIGS. 1-5 depict an embodiment of a valve assembly 100 that includes a body 104 and a valve element 108 that are connected by a retainer 112. The valve assembly 100 defines a central axis 116 about which the valve element 108 and the body 104 are radially symmetrical and coaxially aligned. In some embodiments, the valve assembly 100 is not radially symmetrical about the central axis 116, while still having components that are coaxially aligned. In some embodiments, the valve assembly 100 has components that are not coaxially aligned about the central axis 116. The valve element 108 is depicted in a closed position or configuration in which an exhaust (not shown) formed between the valve element 108 and the body 104 is closed to prevent dirt, debris, fluids, and other matter from entering into the valve assembly 100. In operation, when the valve assembly 100 is mounted to a battery pack wall 120 (see FIG. 5), the valve element 108 is operably coupled to the body 104 and configured to be displaced along an actuating direction 124 that is substantially parallel with the central axis 116 when the valve assembly 100 is actuated by an increase in pressure within the battery pack (not shown), thereby reaching an actuated or open position in which the exhuast (not shown) is opened to release pressure to an external or surrounding environment. The valve assembly 100 is tuned or selectively configured to be actuated at a predetermined threshold pressure that is associated with a biasing element 128. In the illustrated embodiment, the biasing element 128 is a spring, *e.g.,* a helical spring, that is operably mounted between the retainer 112 and the body 104. In operation, the biasing element 128 is configured to be overcome by the pressure generated within the battery pack (not shown) at the predetermined threshold. This operation is referenced herein as active venting or active degassing, in that the valve element 108 is displaced to provide the venting or relief functionality.

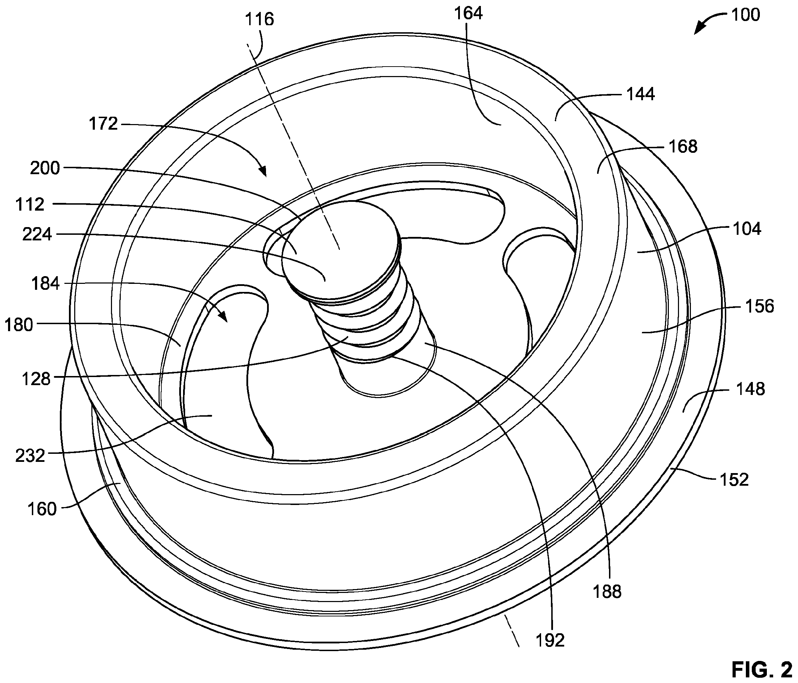

Referring to FIGS. 1 and 2, the body 104 of the valve assembly 100 includes a first end 140 that is opposite a second end 144. The body 104 includes a flange 148 at or proximate the first end 140. The flange 148 extends circumferentially outward relative to the central axis 116 and is bounded or delimited by a peripheral edge 152. The body 104 further includes an outer sidewall 156 that extends from the first end 140 to the second end 144. As shown in FIG. 2, the outer sidewall 156 extends from a step 160 that is arranged inwardly of the peripheral edge 152 of the flange 148 of the body 104. The outer sidewall 156 is connected to an inner sidewall 164 by a girder 168 that is disposed at the second end 144. The girder 168 is a substantially planar, annular wall that spans between the inner sidewall 164 and the outer sidewall 156. The inner sidewall 164 of the body 104 extends toward the first end 140 and at least partially defines a chamber 172 about the central axis 116.

Still referring to FIGS. 1 and 2, the inner sidewall 164 connects to a plate 180 that is disposed between the first end 140 and the second end 144. In the illustrated embodiment, the plate 180 is disposed proximate the first end 140 and partially bounds the chamber 172. The plate 180 includes a plurality of vents 184 that are formed as through-holes extending entirely through the plate 180 and spaced radially from one another about the central axis 116. Accordingly, the vents 184 are selectively opened or closed by displacement of the valve element 108 relative to the first end 140 of the body 104. A stem 188 is arranged centrally on the plate 180 and extends away from the plate 180 toward the second end 144 to define a seat 192 on which the biasing element 128 is mounted. The stem 188 further serves as a guide for a barrel 196 (see FIG. 5) of the valve element 108, as will be described in further detail below. In the illustrated embodiment, the body 104 is a one-piece, unitary component, such that the plate 180, the stem 188, the flange 148, the step 160, the outer sidewall 156, the inner sidewall 164, and the girder 168 are formed integrally with one another.

In some embodiments, the body 104 is formed of multiple separate and discrete components or portions that are joined or fastened together. The body 104, the valve element 108, and the retainer 112 may each be formed of a metal or metal alloy material, or another durable material. In some embodiments, the entire body 104 may be formed of the same material, such as when the body 104 is formed as a unitary structure through drawing, deep drawing, stamping, punching, or other machining methods, including, e.g., welding, milling, drilling, forging, casting, or additive manufacturing. In some embodiments, the body 104 is formed of materials ranging in density, thermal mass, melting point, conductivity, or other characteristics.

The retainer 112 includes a head 200 that is connected to a foot 204 by a shaft 208 extending axially in parallel with the central axis 116. As referenced herein, the retainer 112 can be a fastener, or a joining mechanism, such as a rivet, in addition to acting as a piston that translates axially during operation of the valve assembly 100 to provide venting and close or seal the battery pack (not shown). In the illustrated embodiment, the head 200 of the retainer 112 is arranged proximate the second end 144 of the body 104 and the foot 204 of the retainer 112 is arranged proximate the first end 140 of the body 104. The retainer 112 defines a channel 216 that extends entirely through the head 200, the shaft, 208, and the foot 204. The biasing element 128 is mounted on the seat 192 and disposed around a portion of the shaft 208 of the biasing element 128. In the illustrated embodiment, a membrane 224 is attached to the head 200 of the retainer 112 to at least partially cover the channel 216 and is configured to provide passive pressure relief when the valve element 108 is in the closed position. The membrane 224 can be secured using adhesive, glue, welding, fusing, molding, or any suitable technique. The membrane 224 can be formed of a material, thickness, diameter, or shape for achieving the desired or required airflow through the membrane 224 into the channel 216 of the retainer 112, to achieve desired or required thermal transfer, and to prevent ingress or egress of matter, *e.g.,* dirt, debris, moisture, *etc.* In some embodiments, the head 200, foot 204, or shaft 208 of the retainer 112 can be provided with a coating (not shown) of material to perform similar functionality as the membrane 224. The retainer 112 may be formed by deep drawing, stamping, punching, rolling, or other machining methods, including, e.g., welding, milling, drilling, forging, casting, or additive manufacturing. In the illustrated embodiment, the retainer 112 is a unitary, one-piece structure. In some embodiments, the retainer 112 can be formed of multiple components or pieces that are joined together. The retainer 112 can be formed of the same material as the body 104. In some embodiments, the retainer 112 is formed of a different material than a material of the body 104. In some embodiments, the retainer 112 is formed of materials ranging in density, thermal mass, melting point, conductivity, or other characteristics.

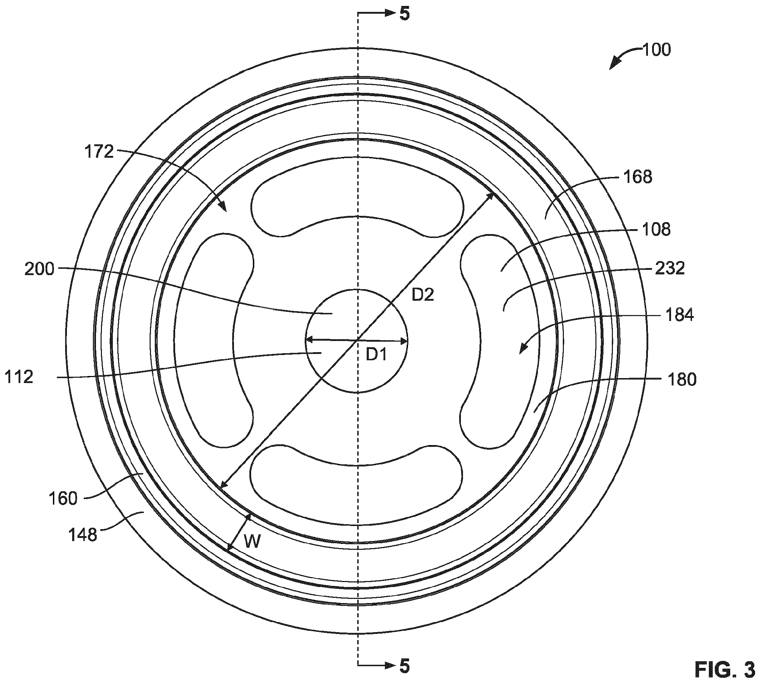

Referring to FIG. 3, the head 200 of the retainer 112 defines a head diameter D1. The membrane 224 spans entirely across the head diameter D1 of the head 200 of the retainer 112. The inner sidewall 164 of the body 104 defines a chamber diameter D2. The chamber diameter D2 is greater than the head diameter D1. In some embodiments, the chamber diameter D2 varies along the body 104 between the second end 144 and the plate 180. In some embodiments, the chamber diameter D2 is uniform between the second end 144 and the plate 180, such as in the illustrated embodiment. The plate 180 defines a total surface area across that spans substantially the entire chamber diameter D2. An effective surface area of the plate 180 accounts for the presence of the vents 184 on the plate 180. The vents 184 are selectively configured to allow fluid, *e.g.,* air, to pass through the plate 180 and to act on or press against an actuating surface 232 of the valve element 108. By increasing, decreasing, or rearranging the vents 184 on the plate 180, it is possible to selectively vary the amount of pressure that acts on the actuating surface 232 of the valve element 108. The effective surface area of the plate 180 and vents 184 can be understood as a proportion of the total surface area of the plate 180. In some embodiments, the effective surface area is between about 10% and about 90% of the total surface area. In some embodiments, the effective surface area is between about 20% and about 80%, or between about 30% and about 70%, or between about 40% and about 60%, or about 50% of the total surface area.

Still referring to FIG. 3, the girder 168 has a width W measured between the inner sidewall 164 and the outer sidewall 156, as illustrated in the figure. In some aspects, the pack wall 120 of a battery pack (not shown) may have openings of a standard or nominal size in which the valve assembly 100 is configured to be mounted. Accordingly, the valve assembly 100 is sized to fit within the standardized size of opening, while still being configured to perform or achieve certain active or passive venting functionalities. As a result, the chamber diameter D2 and head diameter D1 may be varied to provide the active or passing venting functionalities, and the width W of the girder 168 may be determined or varied to fit within the standardized openings of the battery pack. Put another way, the width W of the girder 168 may be determined after the head diameter D1 and the chamber diameter D2 are selected, such that the girder 168 is increased or decreased to enable the valve assembly 100 to fit within the opening of the pack wall 120.

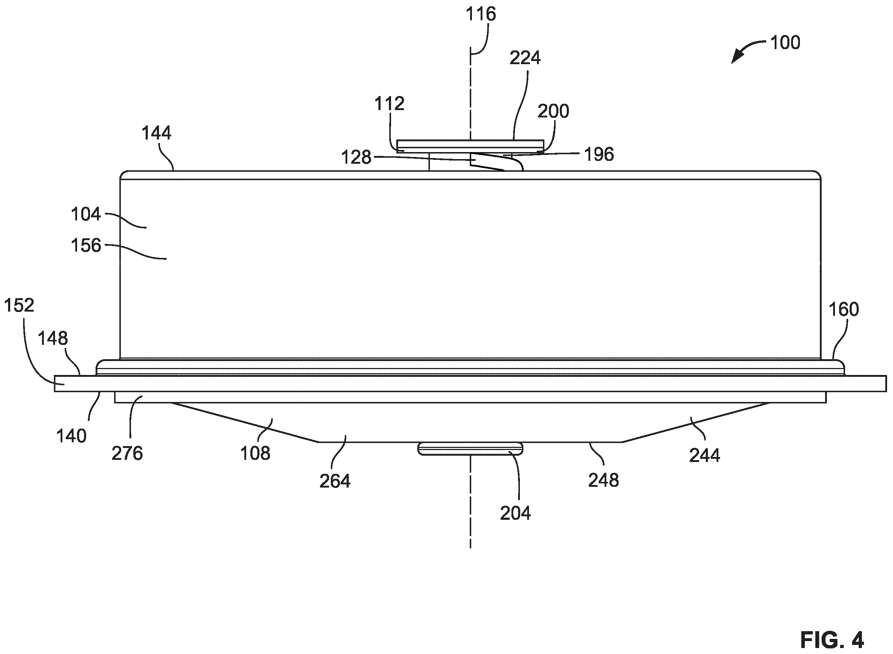

Referring to FIG. 4, the foot 204 of the retainer 112 flares or extends outwardly from the central axis 116 to provide a platform that abuts the valve element 108. The head 200 of the retainer 112 is spaced apart from the second end 144 of the body 104 in the axial direction, *i.e.,* relative to the central axis 116. The biasing element 128 has an end that abuts the head 200 of the retainer 112. Accordingly, the retainer 112 is configured to displace or move toward the first end 140 of the body 104, in the actuating direction 124 (see FIG. 5) against an opposing force applied by the biasing element 128 to permit active venting. In particular, when pressure acts on the actuating surface 232 of the valve element 108, the valve element 108 presses against the foot 204 of the retainer 112 and causes displacement in the actuating direction 124 to form an exhaust (not shown) between the valve element 108 and the body 104 through which pressure is relieved. In some embodiments, passive venting can occur prior to and without overcoming the opposing force of the biasing element 128. In some aspects, passive venting is provided by air or gas passing through the membrane 224 and into the channel 216 of the retainer 112 to be egressed from the foot 204 of the retainer 112. Accordingly, the material properties of the membrane 224 are selectively configured to permit passive venting through the channel 216 of the retainer 112 and may be varied according to the particular size, application, environment, and other operating factors associated with the performance of the valve assembly 100.

Referring back to FIG. 1, the valve element 108 includes an outer portion 240, an intermediate portion 244, and an inner portion 248 that are concentrically arranged about the central axis 116. The valve element 108 includes the hollow barrel 196 that extends axially from the inner portion 248 to encase the shaft 208 of the retainer 112. The barrel 196 extends toward the second end 144 of the body 104 and abuts the head 200 of the retainer 112, thereby providing contact with the retainer 112 to enable cooperative movement with one another. The outer portion 240 circumscribes the intermediate portion 244, and the intermediate portion 244 circumscribes the inner portion 248. Further, the outer portion 240 and the inner portion 248 extend substantially orthogonally relative to the central axis 116, and the intermediate portion 244 extends at an angle, e.g., obliquely, between the outer portion 240 and the inner portion 248 relative to the central axis 116. Accordingly, the inner portion 248 and the outer portion 240 are disposed on different axial planes or at different axial positions relative to one another. In other words, the inner portion 248 is positioned a greater distance from the first end 140 of the body 104 than a distance at which the outer portion 240 is located from the first end 140 of the body 104. The valve element 108 can be formed of the same material as the body 104 and/or the retainer 112. In some embodiments, the valve element 108 is formed of a different material than a material of the body 104 and/or the retainer 112. In some embodiments, the valve element 108 is formed of materials ranging in density, thermal mass, melting point, conductivity, or other characteristics.

Referring to FIGS. 1 and 5, the valve element 108 forms a frustoconical structure, although other configurations are contemplated. The actuating surface 232 defines a cavity 256 between the valve element 108 and the body 104, and the cavity 256 extends between the actuating surface 232 and the plate 180. Further, the cavity 256 is in fluid communication with a gap 260 formed between the inner sidewall 164 and the outer sidewall 156 of the body 104, and each gap 260 extends from the girder 168 at the second end 144 to the step 160 on the flange 148 at the first end 140. In addition, the cavity 256 is interrupted by the barrel 196 the encases the shaft 208 of the retainer 112. The valve element 108 defines the actuating surface 232 along the outer portion 240, the intermediate portion 244, and the inner portion 248. Further, the valve element 108 defines a guard surface 264 opposite the actuating surface 232 and along the outer portion 240, the intermediate portion 244, and the inner portion 248. The guard surface 264 of the valve element 108 is configured to prevent dirt, debris, and fluids from entering into or through the valve assembly 100. Additionally, the valve element 108 is engaged with a seal or sealing element 276 that is disposed around the outer portion 240 and seated against the first end 140 of the body 104 in the closed/unactuated position or configuration. In the illustrated embodiment, the seal 276 wraps or extends about a rim 280 that extends axially from the outer portion 240 of the valve element 108. In some embodiments, the seal 276 is molded around the rim 280 and the outer portion 240 of the valve element 108. In some embodiments, the seal 276 is attached or coupled to the rim 280 during an assembly step. In this way, the seal 276 is configured to move relative to the body 104 during operation of the valve assembly 100. The seal 276 is made of an elastomeric material, such as, *e.g.,* a polymer or composite.

In operation, the valve assembly 100 is configured to relieve pressure from an interior of the battery pack (not shown) using passive and active venting features. As described above and shown in FIG. 5, the valve assembly 100 is enabled to provide passive venting by allowing pressure to escape through the membrane 224 attached to the head 200 and across the channel 216 of the retainer 112. Further, the valve assembly 100 is enabled to provide full or partial active venting by allowing pressure to escape through the valve element 108 in the actuating direction 124 to at least partially open an exhaust (not shown) that is formed as an annular gap between the valve element 108 and the body 104. In this regard, as indicated by pressure flowpath 288, the gas or air within the battery pack (not shown) flows into the chamber 172, through the vents 184, and at least partially fills the cavity 256 before being released or passed out of the exhaust (not shown) after the valve element 108 is partially displaced. The gas or air also can flow into the gap 260 formed in the body 104 to cause at least a partial displacement of the valve element 108 from the body 104 to form at least a partial version of the exhuast (not shown), such that the air or gas escapes before building or increasing further within the battery pack (not shown) or body 104. Further, when the pressure increases beyond a predetermined threshold, such that the passive venting features and partial active venting features are insufficient to reduce the pressure generating within the battery pack (not shown), the active venting feature of the valve assembly 100 is actuated. In this regard, the valve element 108 is displaced in the actuating direction 124 by the increasing pressure so that the retainer 112 displaces axially toward the first end 140 of the body 104, which is fastened or mounted to the pack wall 120. As the retainer 112 is displaced, the head 200 compresses the biasing element 128 against the seat 192 formed on the stem 188 of the body 104. As a result, the exhaust (not shown) formed between the valve element 108 and the body 104 is opened to allow gas or air to escape to the surrounding environment or atmosphere. The exhaust (not shown) is opened fully during active venting, in that the vent expands to provide a greater annular volume through which the pressure can escape than during passive venting. When returned to the closed position, the rim 280 of the valve element 108 is compressed against the first end 140 of the body 104 to elastically deform the seal 276, thereby preventing pressure or airflow through the exhaust (not shown) and out of the valve assembly 100.

Referring still to FIG. 5, the valve assembly 100 is depicted with the flange 148 being attached to an outer surface 296 of the pack wall 120 of the battery pack (not shown). Further, the body 104 extends beyond an inner surface 300 of the pack wall 120, so as to extend into the interior of the battery pack to be exposed and in fluid communication with the pressure generated therein. As a result, only the foot 204 of the retainer 112, the valve element 108, and the flange 148 of the body 104 are visible or exposed from outside of the battery pack, thereby providing a discrete and unobtrusive mounting configuration in the pack wall 120 to reduce or minimize the overall size and outer envelope occupied by the battery pack (not shown). This can be advantageous when the battery pack is located where space or volume must be used efficiently, such as in automotive vehicles.

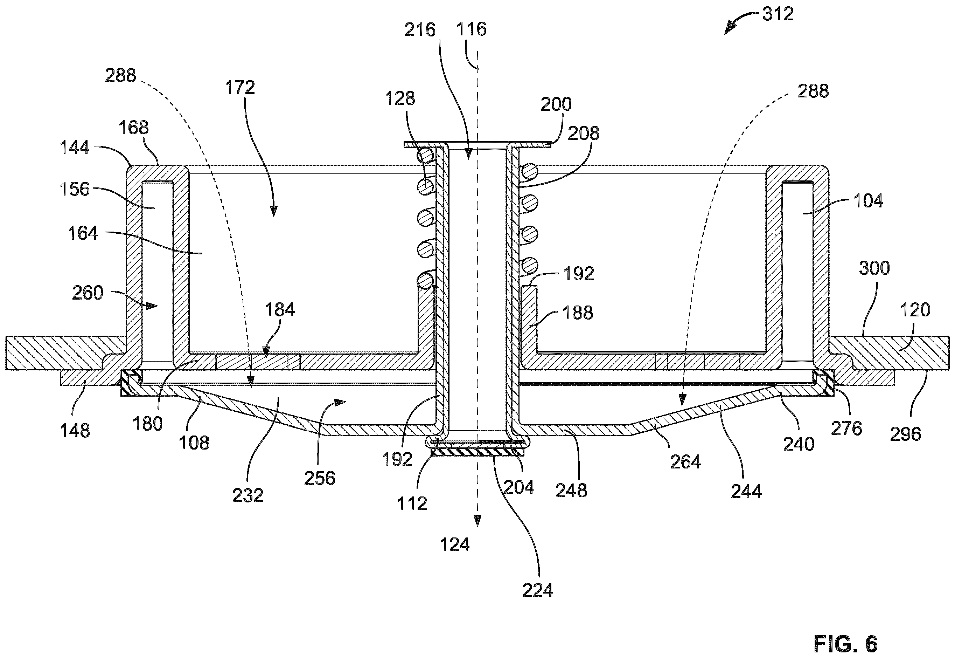

FIGS. 6 depicts another embodiment of a valve assembly 312. In this embodiment, elements that are shared with-i.e., that are structurally and/or functionally identical or similar to-elements present in the valve assembly 100 are represented by like reference numerals. The retainer 112 of the valve assembly 312 includes the membrane 224 attached to the foot 204, rather than at the head 200 in the valve assembly 100 of FIGS. 1-5. In particular, the membrane 224 is attached to the foot 204 to at least partially cover the channel 216 and is configured to provide passive pressure relief when the valve element 108 is in the closed position. The membrane 224 can be secured using adhesive, glue, welding, fusing, molding, or any suitable technique. In this way, the membrane 224 provides passive venting of gas or air that has entered into the channel 216, such that pressure escapes through the membrane 224 directly into the surrounding environment. Further, the membrane 224 is located outside of the pack wall 120 of the battery pack, where the membrane 224 is exposed to lower temperatures and, in some instances, can be formed of different materials having lower melting points. Further, as in the embodiment of FIG. 1, the biasing element 128 directly abuts the head 200 of the retainer 112. It is contemplated that the retainer 112 of the present disclosure may not include the membrane 224 attached thereto, such that the channel 216 is uninterrupted and forms an open flowpath between interior of the battery pack and the surrounding environment. In some embodiments, the head 200 or the foot 204, or both, of the retainer 112 are closed off by a solid portion, so as to prevent any flow through the channel 216. In some embodiments, the retainer 112 is formed as a solid structure without the channel 216.

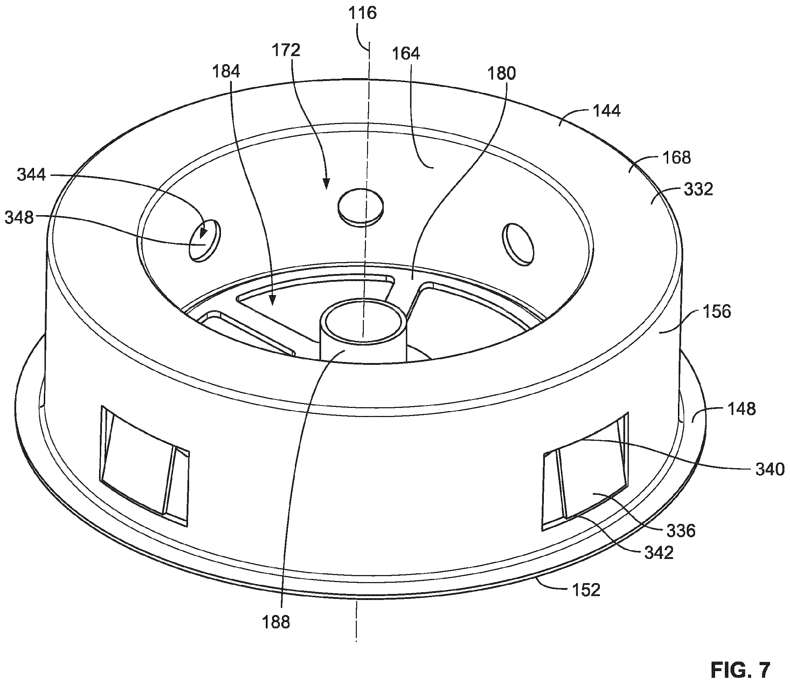

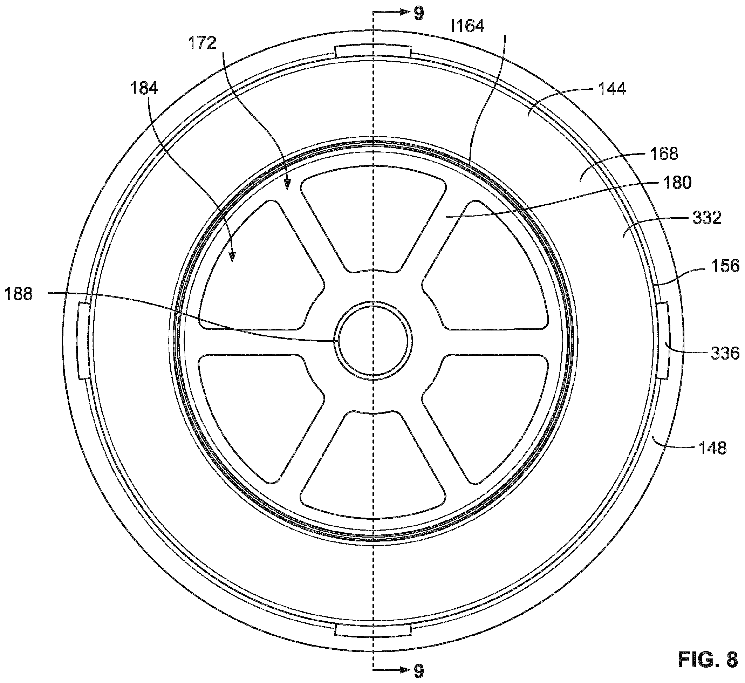

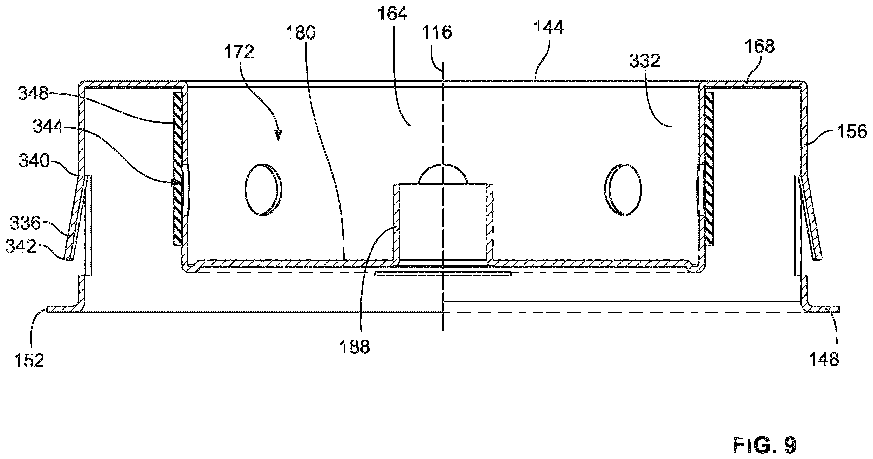

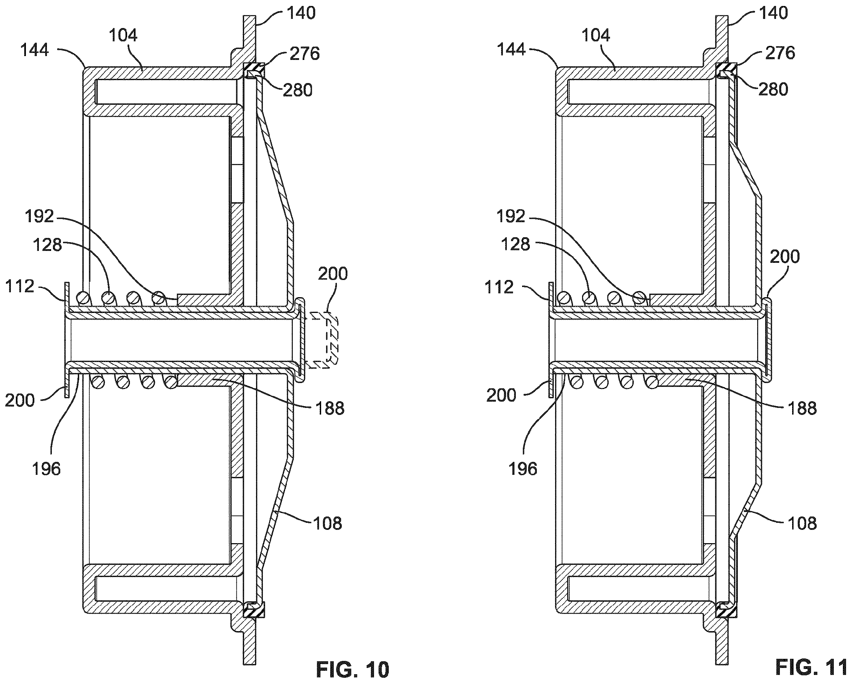

FIGS. 7-9 illustrate another embodiment of a body 332 to be used with either of the valve assemblies 100, 312. The body 332 includes a plurality of tabs 336 formed in the outer sidewall 156. The tabs 336 are arranged to be radially spaced apart from one another about 90 degrees relative to the central axis 116. In some embodiments, the tabs 336 can be arranged closer to one another or farther from one another, and there may be greater or fewer tabs 336 provided than shown. The tabs 336 are predisposed, e.g., bent, to extend outwardly from the outer sidewall 156 relative to the central axis 116 and to be resilient, so as to aid in retention of the body 332 with the pack wall 120 (see FIG. 10). In particular, each tab 336 has a hinge portion 340 about which the tab 336 is configured to be rotated or bent and a free end 342 that is opposite the hinge portion 340. The free end 342 of each tab 336 is configured to abut or contact the inner surface 300 of the pack wall 120 when mounted to the battery pack (not shown). Accordingly, the body 332 is secured to the pack wall 120 to prevent axial movement or displacement in two directions, *i.e.,* into or out of the pack wall 120.

Further, the body 332 includes a plurality of apertures 344 formed in the inner sidewall 164. The apertures 344 are arranged to be spaced apart from one another about 45 degrees relative to the central axis 116. In some embodiments, the apertures 344 can be arranged closer to one another or farther from one another, and there may be greater or fewer apertures 344 provided. A membrane 348 is secured to the inner sidewall 164 within the gap 260 of the body 332 to at least partially cover the apertures 344. The membrane 348 can be secured using adhesive, glue, welding, fusing, molding, or any suitable technique. The membrane 348 can be formed of a material, thickness, diameter, or shape for achieving the desired or required airflow through the membrane 348 into the channel 216 of the retainer 112, to achieve desired or required thermal transfer, and to prevent ingress or egress of matter, *e.g.,* dirt, debris, moisture, *etc.* Due to the membrane 348 and apertures 344 arranged to be in fluid communication with the chamber 172, the body 332 is configured to provide passive venting by allowing gas or air to pass through the apertures 344 and the membrane 348, into the gap 260, and down toward the actuating surface 232 of the valve element 108 (see FIGS. 5 and 10), and partial active venting may be achieved by partial displacement of the valve element 108, as described previously.

FIGS. 10 and 11 depict a schematic representation of a method of forming the foot 204 of the retainer 112, which is depicted as being closed by a solid end. In particular, the foot 204 is represented in dashed lines in a pre-formed state. An axial force is applied to the foot 204 to axially compress and crush the pre-formed shape of the foot 204 into the outwardly flared and crimped structure that is represented in solid lines. During this forming method, the retainer 112 is set to preload tension on the biasing element 128 that holds the valve element 108 in the closed/unactuated position. Accordingly, the retainer forming method is preferably performed after the body 104 and the valve element 108 are partially assembled, after the biasing element 128 is arranged around the barrel 196 of the valve element 108 and against the seat 192 of the stem 188, and after the retainer 112 is passed through the barrel 196 of the valve element 108 until the head 200 abuts the biasing element 128. As a result, the preload tension can be set to achieve the predetermined threshold for tuning the valve assembly 100, 312 to provide the required active venting functionality.

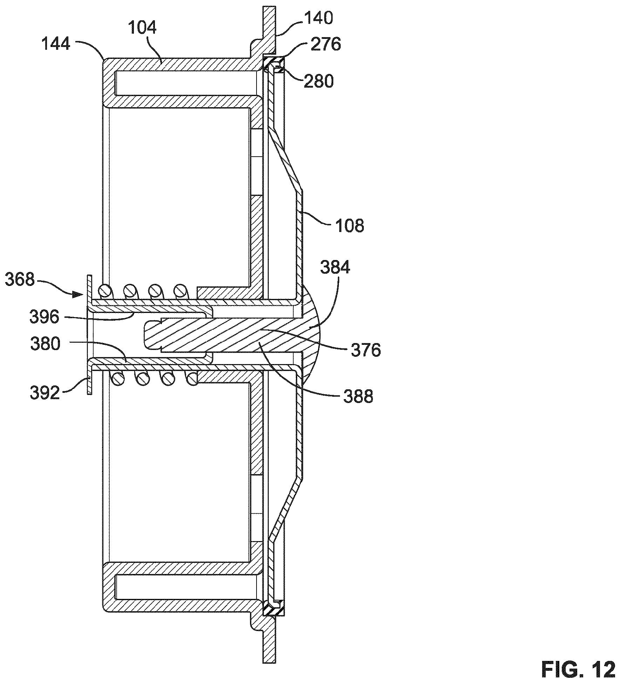

FIG. 12 illustrates another embodiment of a retainer 368 used with the valve assemblies 100, 312 of the present disclosure. The retainer 368 comprises multiple components including a fastening portion 376 and a sleeve portion 380. The fastening portion 376 is arranged to have a foot 384 that abuts the valve element 108 and a solid shaft 388 that extends through the barrel 196 of the valve element 108 toward the second end 144 of the body 104. The fastening portion 376 is depicted as a rivet fastener, but may be another suitable fastener, such as, *e.g.,* a threaded fastener, a bolt fastener, a split pin, or the like. The sleeve portion 380 is a hollow structure that includes a head 392 arranged proximate the second end 144 of the body 104 and a hollow shaft 396 that extends toward the first end 140 to engage and at least partially receive the solid shaft 388 of the fastening portion 376 of the retainer 368. In this way, the retainer 368 includes the sleeve portion 380 coupled to or assembled with the fastening portion 376 to provide a multi-component retention structure. Further, the valve element 108 of FIG. 12 is depicted with the rim 280 protruding axially away from the first end 140 of the body 104, in the opposite direction in comparison with the rim 280 of the valve element 108 of FIG. 11.

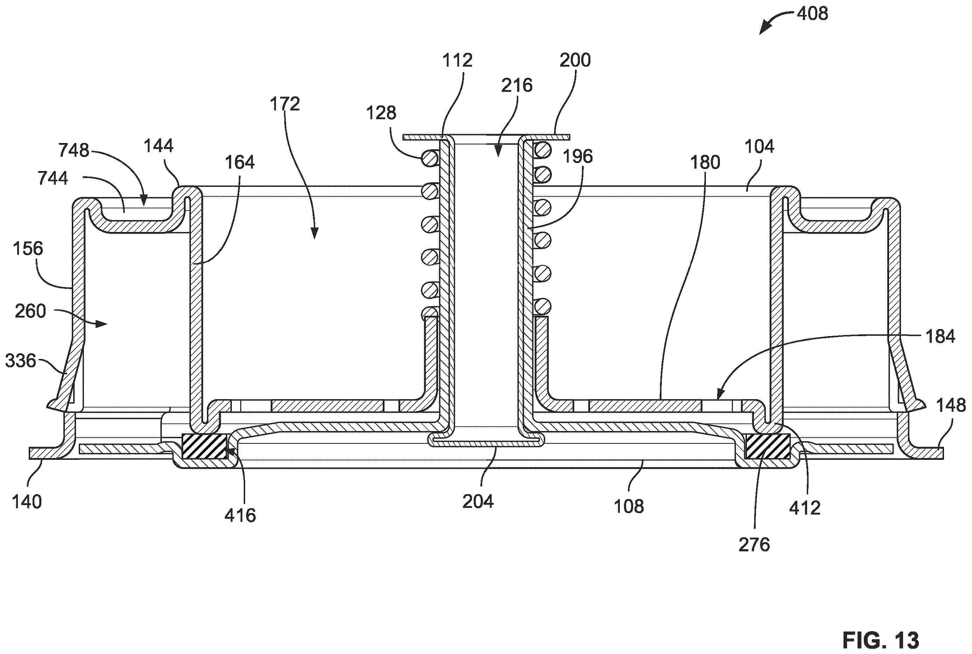

FIG. 13 depicts another embodiment of a valve assembly 408 of the present disclosure. In this embodiment, elements that are shared with-i.e., that are structurally and/or functionally identical or similar to-elements present in the valve assembly 100 are represented by like reference numerals. The body 104 has an inner rim 412 formed between the plate 180 and the inner sidewall 164 by, e.g., stamping or drawing the plate 180 toward the second end 144 and away from the first end 140. Accordingly, the plate 180 is axially spaced apart from the first end 140 of the body 104 and the inner rim 412 has a U-shaped or crimped structure with increased strength and resilience. Further, the inner rim 412 is configured to engage the seal 276 that is received in an annular recess or groove 416 formed in the valve element 108. The groove 416 of the valve element 108 is configured to receive and retain the seal 276 therein to prevent the seal 276 from becoming displaced or unseated. Thus, the seal 276 and the valve element 108 are configured to move relative to the body 104 during operation. The seal 276 can be attached into the groove 416 of the valve element 108 by adhesive, interference fit, welding, fusing, or any suitable method. With the seal 276 at least partially recessed into the groove 416, the valve element 108 also serves as a heat shield to limit or mitigate exposure of the seal 276 to elevated temperatures, such as, *e.g.,* during a thermal runaway of the battery pack (not shown). The groove 416 can be formed in a variety of cross-sectional shapes, including the U-shape or semi-rectangular shape shown, as well as, *e.g.,* a semi-circular or semi-conical shape, a semi-elliptical shape, a semi-pyramidal shape, or an irregular shape configured to provide increased retention and protection of the seal 276. Additionally or alternatively, it is envisaged that a groove can be formed in the first end 140 of the body 104, such that the seal 276 is retained on the body 104 as the valve element 108 moves toward or away during actuation.

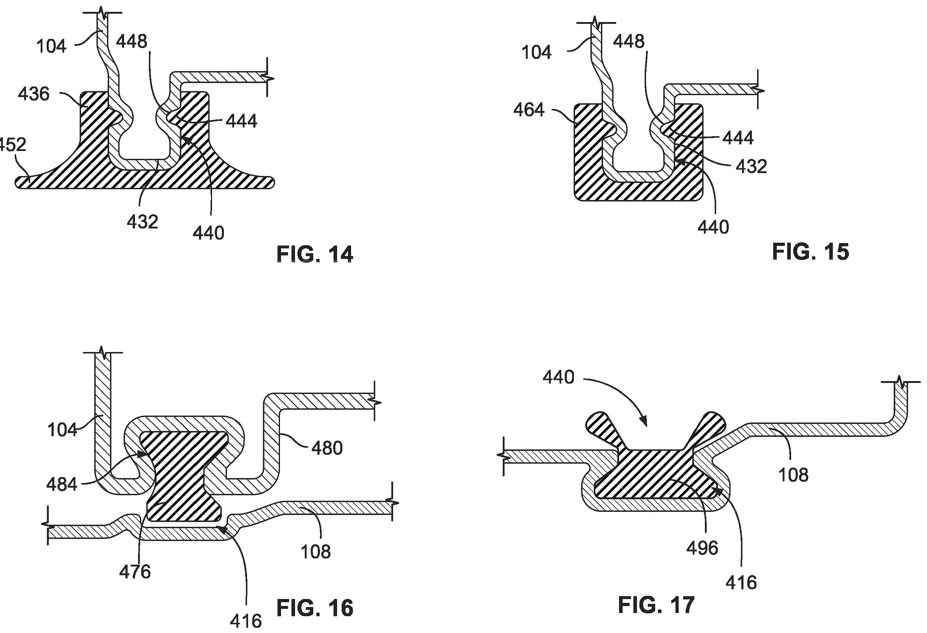

FIG. 14 depicts another embodiment of an inner rim 432 being received within a seal slot 440 integrally formed into a seal 436 to wrap partially around the inner rim 432. Further, the seal 436 includes inwardly protruding nubs 444 that extend toward one another and engage or are received in corresponding pockets 448 forming within the inner rim 432 of the body 104. Accordingly, the seal 436 is configured to snap onto or elastically compress the inner rim 432 to provide improved protection from ingress or egress between the body 104 and the valve element 108 in the closed/unactuated position. The seal 436 of FIG. 14 also includes legs 452 that extend outwardly away from one another to increase a mating surface area along which the seal 436 is attached to the valve element 108. Accordingly, valve element 108 is configured to move relative to the seal 436 during operation. FIG. 15 depicts a seal 464 similar to the seal 436 of FIG. 14, but without the legs 452 extending therefrom.

FIG. 16 depicts a seal 476 being formed with an I-shaped cross section and an inner rim 480 of the body 104 with a corresponding annular receptacle 484 in which an upper portion of the seal 476 is configured to be received in the closed/unactuated position. FIG. 17 depicts a seal 496 with the seal slot 440, similar to FIG. 14, but the seal 496 includes a widened or thickened lower end that is configured to be compressed or snapped into the groove 416 of the valve element 108 to improve retention thereon. Accordingly, valve element 108 and the seal 496 are configured to move relative to the body 104 during operation.

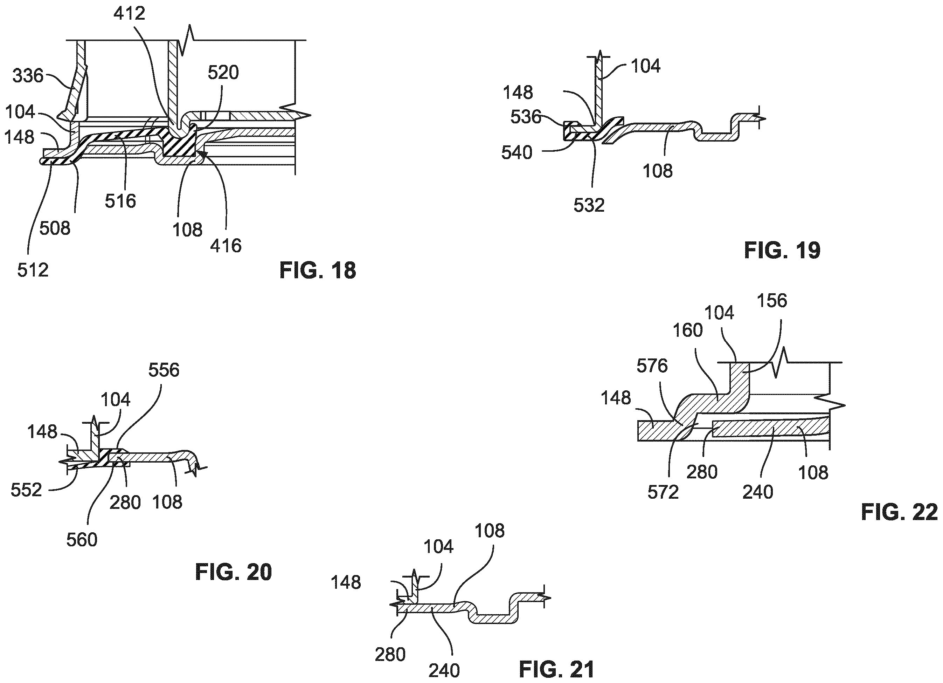

FIG. 18 illustrates an embodiment of an auxiliary seal 508 in connection with the body 104 and the valve element 108 of FIG. 13. The auxiliary seal 508 is provided as a wide, thin, annular gasket that has an outer end 512, a midsection 516, and an inner end 520. The outer end 512 is positioned about the flange 148 of the body 104 and extends outwardly beyond the valve element 108. The inner end 520 is positioned between the inner rim 412 of the body 104 and the valve element 108. In some embodiments, the auxiliary seal 508 is provided in lieu of the seal 276 and is configured to fit within the groove 416 of the valve element 108. The midsection 516 of the auxiliary seal 508 extends across and at least partially covers or encloses the gap 260 formed between the inner sidewall 164 and the outer sidewall 156 of the body 104. This way, any gas or air that passes around or through the tabs 336 formed on the outer sidewall 156 is prevented or blocked from passing through the seal 508 and out of the valve assembly 408. Similarly, the auxiliary seal 508 prevents ingress of dirt, debris, air, gas or other media into the valve assembly 408 and, thus, the battery pack. The inner end 520 of the auxiliary seal 508 can be formed with a thickened, U-shaped end having a pre-formed seal slot to provide improved connection with the inner rim 412 of the body 104 and the groove 416 of the valve element 108.

FIG. 19 depicts another embodiment of an auxiliary seal 532 with a lip 536 provided on an outer end 540 to wrap around or snap-fit onto the flange 148 of the body 104. Accordingly, the auxiliary seal 532 is attached to the body 104 and affords for additional sealing functionality between the flange 148 and the pack wall 120 (see FIG. 5).

FIG. 20 illustrates another embodiment of an auxiliary seal 552 having a clamp segment 556 formed on an inner end 560 to wrap around or snap-fit onto the rim 412 of the outer portion 240 of the valve element 108.

FIGS. 21 depicts an embodiment in which the first end 140 of the body 104 includes an inner step 572 between the flange 148 and the outer sidewall 156. The inner step 572 is configured to receive the rim 280 of the outer portion 240 of the valve element 108 to perform a sealing function with similar advantages described above related to the auxiliary seal 508 of FIG. 18. The inner step 572 may be formed by an oblique or angled segment 576 that extends from the flange 148 to the step 160. This way, the inner step 572 and valve element 108 provide auxiliary sealing functionality without the addition of another component, *i.e.,* the auxiliary seal 508, However, in some embodiments, the inner step 572 can be provided in addition to the auxiliary seal 508 for even further ingress and/or egress protection.

FIG. 22 depicts another arrangement of the valve element 108 and the body 104 for providing auxiliary sealing functionality, e.g., ingress and/or egress protection. The rim 280 of the valve element 108 is extended outwardly beyond the peripheral edge 152 of the flange 148 of the body 104. Accordingly, when the valve element 108 is in the closed/unactuated position, the outer portion 240 is seated or abuts against the flange 148 at the first end 140 of the body 104 to provide ingress and/or egress protection.

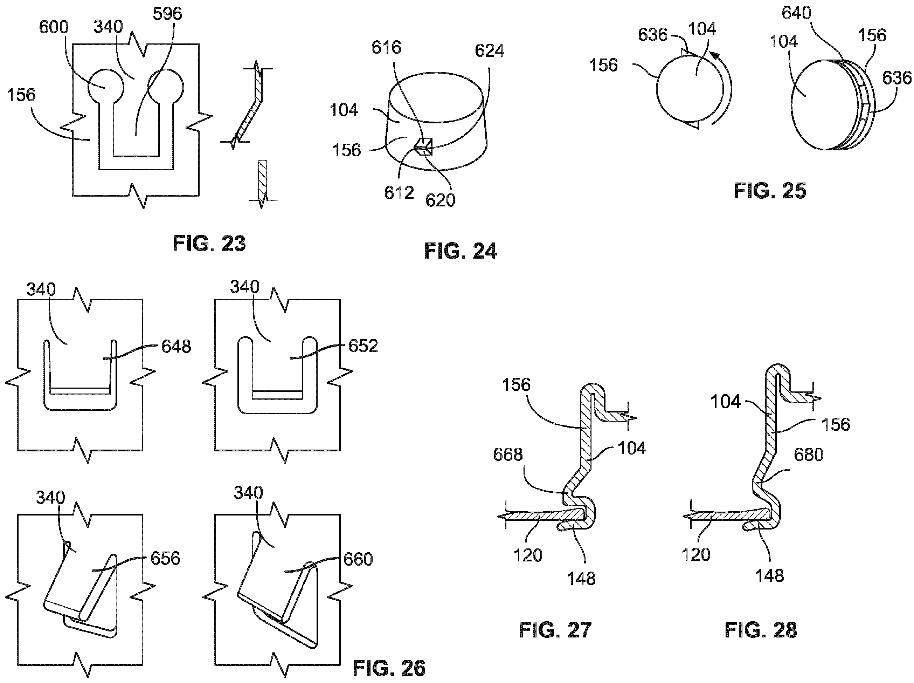

FIG. 23 is a schematic representation of another embodiment of a tab 596. The tab 596 is arranged to extend obliquely outwardly from the outer sidewall 156 of the body 104, which allows air or gas to flow around the tab 596 and into the gap 260 of the valve assembly 408. The tab 596 includes cutouts 600 in the form of circular or semi-circular, enlarged openings provided at the hinge portion 340 to increase flexibility of the tab 596 relative to the outer sidewall 156. Further, the cutouts 600 allow for increased flow of air or gas exchanged between the interior volume of the battery pack and the gap 260 of the valve assembly 408 (see FIG. 13).

FIG. 24 depicts a schematic representation of another embodiment of a tab 612 that is formed with an upper panel 616 and a lower panel 620 that are connected to one another by an intermediate hinge 624. The upper panel 616 and the lower panel 620 are each hingedly connected to the outer sidewall 156 of the body 104 and, thus, the tab 612 is configured to flex or rotated about multiple hinges to provide greater ease of insertion and retention with the pack wall 120. Further, the upper panel 616 and lower panel 620 are arranged to extend obliquely outward from the outer sidewall 156 to provide addition space through which air or gas can flow into the gap 260 of the valve assembly 408(see FIG. 13).

FIG. 25 illustrates a schematic representation of another embodiment of a tab 636 that is configured to extend obliquely outwardly from the outer sidewall 156 of the body 104. The tab 636 is formed as a snap-feature that extends radially away from the outer sidewall 156 relative to the central axis 116 to provide a one-directional retention feature for securing or installing the outer sidewall 156 to the pack wall 120 by rotation about the central axis 116. Accordingly, the tab 636 is rotated 90 degrees in comparison with the orientation of the tab 336 of FIG. 13. Additionally, grooves 640 can be provided along the outer sidewall 156 to guide or receive portions of the pack wall 120, such as nubs, protrusions, threads, or the like, which improve the connection between the outer sidewall 156 and the pack wall 120.

FIG. 26 illustrates yet another schematic representation of various tabs 648, 652, 656, 660 having variations in shape, size, and thickness. For example, the tab 648 is narrowed or tapered in width as it extends away from the hinge portion 340. The tab 652 includes a greater radius of curvature adjacent the hinge portion 340 to provide improved stress-relief and airflow around the tab 652. The tabs 656 and 660 are rotationally predisposed or bent at different outward angles. Further, the tab 656 is thicker in comparison with the tab 660. Accordingly, the tabs 648, 652, 656, 660 can vary in flexibility, resilience, rotational predisposition, and/or size (*e.g.,* width, length, thickness) to afford improved insertion and/or retention functionality when securing the body 104 to the pack wall 120, as well as to provide improved pressure relief functionalities.

FIGS. 27 and 28 are schematic representations of a bump feature 668, 680 provided on the outer sidewall 156 of the body 104 for improving retention with the pack wall 120. The bump features 668, 680 do not include an opening or passage through which air or gas can flow into the gap 260. The bump feature 668 of FIG. 27 extends farther outwardly from the outer sidewall 156 in comparison with the bump feature 680 of FIG. 28.

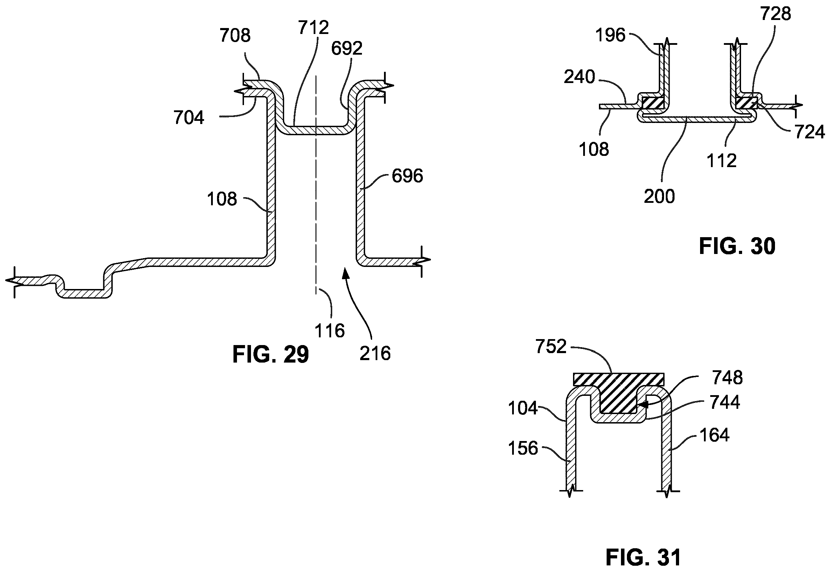

FIG. 29 depicts a schematic representation of a cork 692 that is attached to a barrel 696 of a valve element 108. The barrel 696 includes an outwardly extending tube flange 704 that is configured to receive and mate with a corresponding cork flange 708. The cork 692 includes a plug portion 712 that extends into the barrel 696 below the tube flange 704 to provide ingress and/or egress protection through the valve element 108. In some embodiments, the valve element 108 and the cork 692 can be provided without a retainer.

FIG. 30 depicts a schematic representation of a tertiary seal 724 that is configured to be received between the foot 204 of the retainer 112 and the inner portion 248 of the valve element 108. The inner portion 248 of the valve element 108 can be provided with a tertiary groove 728 in which the tertiary seal 724 can be seated or retained. When assembled, the foot 204 of the retainer 112 is pressed against the inner portion 248 of the valve element 108 to further compress and engage the tertiary seal 724. As a result, the tertiary seal 724 provides improved ingress and/or egress protection.

FIG. 31 illustrates schematic representation of the second end 144 of the body 104 of FIG. 13 having a girder 744 that includes a recess or groove 748 formed about the second end 144 and between the inner sidewall 164 and the outer sidewall 156. The groove 748 is configured to receive an ancillary seal 752 that can be provided with a T-shaped cross-section shape. The ancillary seal 752 is attached to the second end 144 of the body 104 by adhesive, interference fit, welding, fusion, or any suitable manner. In some embodiments, the ancillary seal 752 attaches or snaps into the groove 748. In some embodiments, the ancillary seal 752 attached or snaps onto the groove 748, such as around or over the inner sidewall 164 and the outer side wall 156. In some embodiments, the ancillary seal 752 attaches or couples to cutouts (not shown) formed in the groove 748, the outer sidewall 156, or the inner sidewall 164 of the body 104.

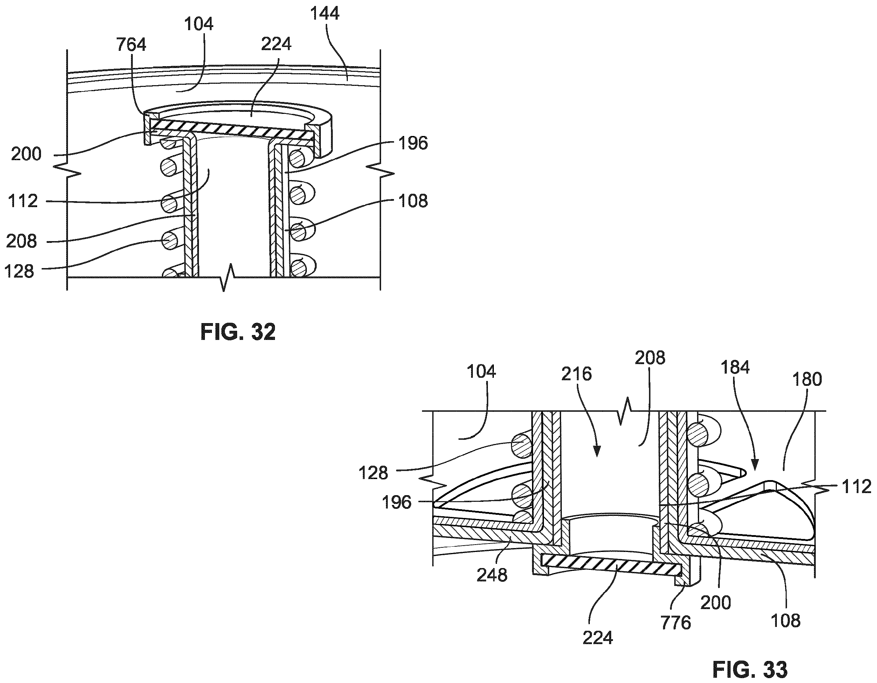

FIG. 32 is a partial, detail view of the valve assembly 100 of FIG. 5 having a clip 764 that is configured to secure the membrane 224 onto the head 200 of the retainer 112. The clip 764 can be formed of a metal or metal alloy material, which may be different or similar to the material used to form the body 104 or the retainer 112. The clip 764 is preferably a one-piece, unitary element that can be coupled to the head 200 by crimping, snapping, or compressing without damage to the membrane 224. The clip 764 is formed to be annular and hollow so that the membrane 224 remains exposed to the interior cavity of the battery pack (not shown) while being secured to the head 200 to prevent dislodgement or removal.

FIG. 33 illustrates a partial, detail view of the valve assembly of FIG. 10 having a clip 776 that is configured to secure the membrane 224 at a modified version of the foot 204 of the retainer 112. In the illustrated embodiment, the modified version of the foot 204 lacks the outwardly flared or crimped portion and is formed as an open end across which the membrane 224 is disposed. The clip 776 can be formed of a metal or metal alloy, which may be different or similar to the material used to form the body 104 or the retainer 112. The clip 776 is preferably a one-piece, unitary element that can be coupled to the foot 204 by snapping or interference fitting into the channel 216 of the retainer 112 without damage to the membrane 224. The clip 776 is formed to be annular and hollow so that the membrane 224 remains exposed to the surrounding environment while being secured to the foot 204 to prevent dislodgement or removal. It will be further appreciated that the plate 180 of the body 104 is provided with a modified arrangement of vents 184. It is contemplated that the modified arrangement can include an increased number of vents 184 than shown, such as, *e.g.,* vents that are comparatively smaller in size to further reduce the effective surface area of the plate 180 and increase the flow of air or gas therethrough.

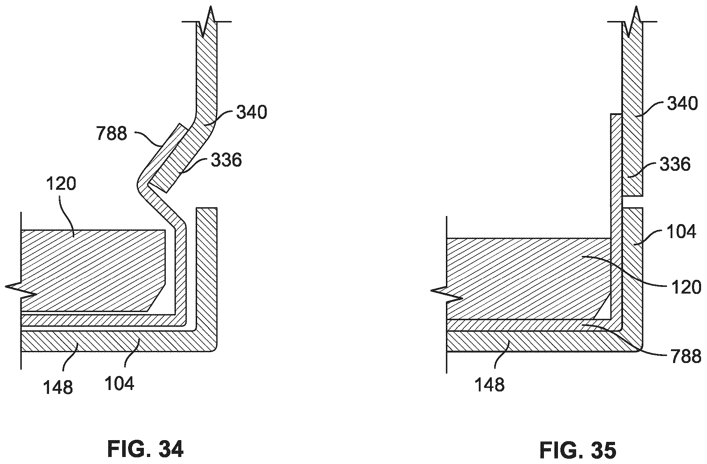

FIGS. 34 and 35 depicts an insulator 788 that is applied or disposed between the body 104 and the pack wall 120. More specifically, the insulator 788 is arranged to line or extend along the flange 148 and the outer sidewall 156 of the body 104. In some embodiments, the insulator 788 extends over the tab 336 that is bent outwardly from the outer sidewall 156, which may mitigate or prevent airflow between the interior volume of the battery pack and the gap 260 (see FIG. 5) inside of the body 104. The insulator 788 is configured to insulator or separate the pack wall 120 from the body 104 to avoid direct contact between dissimilar metals, which can often lead to corrosion or damage in harsh or corrosive environment, such as, *e.g.,* in automotive vehicle applications. The insulator 788 can be formed of a polymer or coated metal structure. Further, the insulator 788 may be formed or molded separately from the body 104 and/or pack wall 120 prior to being assembled or installed between the pack wall 120 and the body 104. In some embodiments, the insulator 788 is configured to facilitate insertion, installation, or retention of the body 104 within the pack wall 120. For example, the insulator 788 can increase the frictional forces and compressive forces experienced during an interference fit or push-in fit of the body 104 into the pack wall 120, thereby increasing the tightness of the installation. When the insulator 788 is formed of a material that melts at elevated temperatures, *e.g.,* a polymer with a melting point below temperatures experienced during a thermal runaway, the insulator 788 can melt or disintegrate at such elevated temperatures. However, the insulator 788 may be elastic or deformable, which can facilitate sliding or relative movement of the body 104 into the pack wall 120, while also enabling the retention features, *e.g.,* the tabs 336 and the flange 148, to secure the body 104 to the pack wall 120.

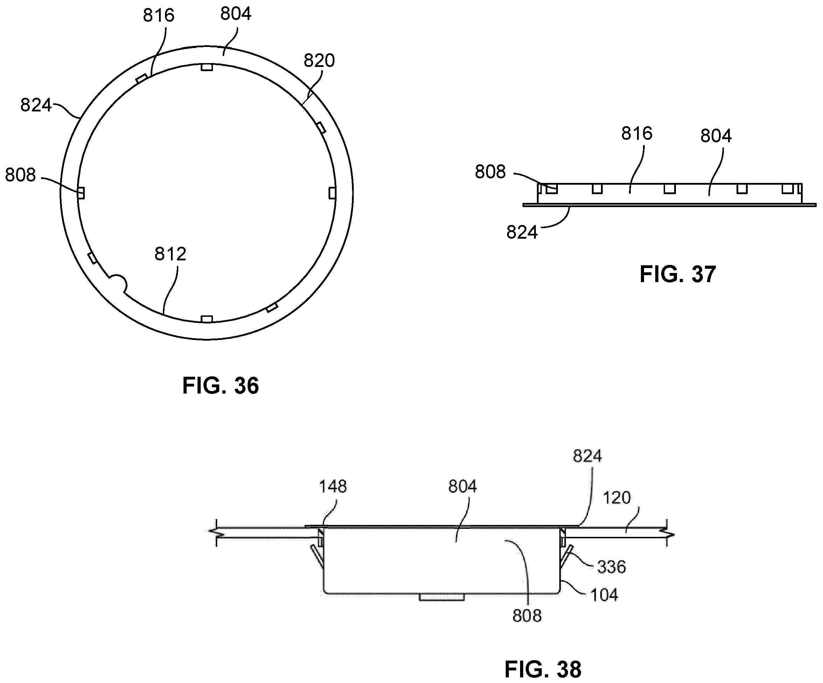

FIGS. 36-38 depict an embodiment of an insulator 804 that includes a plurality of protrusions 808 to act as retention features. The insulator 804 includes the protrusions 808 around an inner edge 812 and an outer edge 816. The protrusions 808 may be spaced from one another and arranged in various configurations. For instances, the protrusions 808 may be disposed at different elevations or positions along the inner edge 812 or outer edge 816. Greater or fewer numbers of protrusions 808 can be provided on the insulator 804 shown in FIG. 36. Additionally, the insulator 804 can include a split 820 through the inner edge 812, outer edge 816, and an insulator flange 824. The split 820 allows the insulator 804 to be installed more easily around the body 104 and within the pack wall 120. In the illustrated embodiment of FIG. 38, the insulator 804 does not cover or extend over the tab 336 of the body 104.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Variations and modifications of the foregoing are within the scope of the appended claims. It is understood that the embodiments disclosed and defined herein extend to all alternative combinations of two or more of the individual features mentioned or evident from the text and/or drawings. All of these different combinations constitute various alternative aspects of the present disclosure. The claims are to be construed to include alternative embodiments to the extent permitted by the prior art.

It will be appreciated by those skilled in the art that while the embodiments of the present disclosure have been described in connection with particular embodiments and examples, the disclosure is not necessarily so limited, and that numerous other embodiments, examples, uses, modifications and departures from the embodiments, examples, and uses are intended to be encompassed by the claims attached hereto. Various features and advantages of the invention are set forth in the following claims.

## Claims

1. A valve assembly (100,312) for a battery pack, comprising:
a body (104) that includes a first end (140) that is opposite a second end (144) and defines a central axis (116) therethrough;
a valve element (108) having a rim (280) that is operably coupled to the first end (140) of the body (104) and a barrel (196) that extends toward the second end (144) of the body (104), the valve element (108) and the body (104) being coaxially aligned along the central axis (116) ; and
a retainer (112) that extends through the barrel (196) and couples the valve element (108) to the body (104), wherein the body (104) includes a plurality of vents (184) that are selectively opened or closed by displacement of the valve element (108) relative to the first end (140) of the body (104), **characterized in that** the body (104) includes a plurality of tabs (336) arranged on an outer sidewall (156), each tab (336) extending outwardly from the outer sidewall (156) relative to the central axis (116), each tab (336) having a hinge portion (340) about which the tab (336) is configured to be rotated during installation of the body (104) with a pack wall (120) of the battery pack, and optionally wherein the plurality of tabs (336) are integrally formed with the body (104) as a unitary structure.

2. The valve assembly (100,312) of claim 1, wherein the plurality of vents (184) vary in size relative to one another, or wherein the plurality of vents (184) are spaced radially about the central axis (116) .

3. The valve assembly (100,312) of claim 1, wherein the body (104) includes an inner sidewall (164) that defines a chamber (172), an annular gap between an outer sidewall (156) and the inner sidewall (164), and a stem (188) that is configured to guide the barrel (196) of the valve element (108) during operation, and wherein the body (104) is integrally formed as a unitary structure.

4. The valve assembly (100,312) of claim 1, wherein a biasing element (128) is connected to the retainer (112) to have a tension preload that is set by axially compressing the retainer (112).

5. The valve assembly (100,312) of claim 1, wherein the body (104) defines a central axis (116), the body (104) including a plate (180) that is disposed between the first end (140) and the second end (144), the plurality of vents (184) being formed through the plate (180), and a stem (188) that is centrally disposed on the plate (180) ;
the valve element (108) being operably attached to the first end (140) of the body (104), the valve element (108) having a barrel (196) that extends toward the second end (144) of the body (104); and
the retainer (112) having a shaft disposed within the barrel (196) of the valve element (108), the shaft connecting a head to a foot (204) of the retainer (112),
wherein a biasing element (128) is operably coupled between the head of the retainer (112) and a seat (192) formed on the stem (188), and wherein the barrel (196) of the valve element (108) abuts the head of the retainer (112).

6. The valve assembly (100,312) of claim 5, wherein a seal (276) is disposed between an inner rim of the body (104) and a portion of the valve element (108).

7. The valve assembly (100,312) of claim 6, wherein the seal (276) is configured to be retained on the inner rim of the body (104), such that the valve element (108) moves relative to the seal (276) during operation, or wherein the seal (276) is configured to be retained on the valve element (108), such that the seal (276) moves relative to the body (104) during operation.

8. The valve assembly (100,312) of claim 5, wherein an insulator (788) is configured to be disposed between the body (104) and a pack wall of the battery pack, or wherein a seal (276) is disposed between the valve element (108) and the foot (204) of the retainer (112).

9. The valve assembly (100,312) for a battery pack of claim 1, wherein
the body (104) has a flange (148) extending from an outer sidewall (156) at a first end, the valve assembly (100,312) comprising :
an inner sidewall (164) that defines a chamber (172), and a plate (180) disposed between the first end (140) and a second end (144), wherein the plate (180) includes a plurality of slots formed therethrough, and wherein the body (104) is a unitary component formed of a metal material;
the valve element (108) being operably coupled to the first end (140) of the body (104);
a sealing element (276) disposed between a portion of the valve element (108) and the body (104);
the retainer (112), wherein the retainer (112) is centrally disposed in the body (104) and is configured to connect the valve element (108) with the body (104); and
a biasing element (128).

10. The valve assembly (100,312) of claim 9, wherein the valve assembly (100,312) includes a membrane (224) attached to at least one of the retainer (112) or the body (104), the membrane (224) being configured to provide passive pressure relief when the valve element (108) is in a closed position.

11. The valve assembly (100,312) of claim 10, wherein the membrane (224) is coupled to a head of the retainer (112) proximate the second end of the body (104) and at least partially covers a channel formed through the retainer (112), or wherein the membrane (224) is coupled to a foot (204) of the retainer (112) proximate the first end (140) of the body (104) and at least partially covers a channel formed through the retainer (112).

12. The valve assembly (100,312) of claim 11, wherein the membrane (224) is secured to the retainer (112) by an annular clip.

13. The valve assembly (100,312) of claim 12, wherein the membrane (224) is disposed around a plurality of apertures (344) formed through the inner sidewall of the body (104), the membrane (224) being arranged within a gap that is in fluid communication with the chamber (172) of the body (104).

## Patentansprüche

1. Ventilanordnung (100,312) für einen Batteriepack, aufweisend:
einen Körper (104), der ein erstes Ende (140) beinhaltet, das einem zweiten Ende (144) gegenüberliegt und eine Mittelachse (116) durch diesen definiert;
ein Ventilelement (108) mit einem Rand (280), der mit dem ersten Ende (140) des Körpers (104) betriebsfähig gekoppelt ist, und einem Zylinder (196), der sich in Richtung des zweiten Endes (144) des Körpers (104) erstreckt, wobei das Ventilelement (108) und der Körper (104) entlang der Mittelachse (116) koaxial ausgerichtet sind; und
einen Halter (112), der sich durch den Zylinder (196) erstreckt und das Ventilelement (108) mit dem Körper (104) koppelt, wobei der Körper (104) eine Vielzahl von Entlüftungsöffnungen (184) beinhaltet, die durch Verschieben des Ventilelements (108) in Bezug auf das erste Ende (140) des Körpers (104) selektiv geöffnet oder geschlossen werden, **dadurch gekennzeichnet, dass** der Körper (104) eine Vielzahl von Laschen (336) beinhaltet, die an einer äußeren Seitenwand (156) angeordnet sind, wobei sich jede Lasche (336) von der äußeren Seitenwand (156) in Bezug auf die Mittelachse (116) nach außen erstreckt, wobei jede Lasche (336) einen Scharnierabschnitt (340) aufweist, wobei die Lasche (336) so konfiguriert ist, dass sie während der Installation des Körpers (104) mit einer Packwand (120) des Batteriepacks um diesen gedreht wird, und optional, wobei die Vielzahl von Laschen (336) integral mit dem Körper (104) als eine einheitliche Struktur ausgebildet sind.

2. Ventilanordnung (100,312) nach Anspruch 1, wobei die Vielzahl von Entlüftungsöffnungen (184) in der Größe in Bezug zueinander variieren, oder wobei die Vielzahl von Entlüftungsöffnungen (184) radial um die Mittelachse (116) beabstandet sind.

3. Ventilanordnung (100,312) nach Anspruch 1, wobei der Körper (104) eine innere Seitenwand (164), die eine Kammer (172) definiert, einen ringförmigen Spalt zwischen einer äußeren Seitenwand (156) und der inneren Seitenwand (164) und einen Schaft (188), der so konfiguriert ist, dass er den Zylinder (196) des Ventilelements (108) während des Betriebs führt, beinhaltet, und wobei der Körper (104) integral als eine einheitliche Struktur ausgebildet ist.

4. Ventilanordnung (100,312) nach Anspruch 1, wobei ein Vorspannelement (128) mit dem Halter (112) verbunden ist, um eine Zugvorspannung aufzuweisen, die durch axiales Zusammendrücken des Halters (112) eingestellt wird.

5. Ventilanordnung (100,312) nach Anspruch 1, wobei der Körper (104) eine Mittelachse (116) definiert, wobei der Körper (104) eine Platte (180) beinhaltet, die zwischen dem ersten Ende (140) und dem zweiten Ende (144) angeordnet ist, die Vielzahl von Entlüftungsöffnungen (184) durch die Platte (180) hindurch ausgebildet sind, und einen Schaft (188), der mittig auf der Platte (180) angeordnet ist;
das Ventilelement (108) betriebsfähig an dem ersten Ende (140) des Körpers (104) angebracht ist, das Ventilelement (108) einen Zylinder (196) aufweist, der sich in Richtung des zweiten Endes (144) des Körpers (104) erstreckt; und
der Halter (112) einen Schaft aufweist, der innerhalb des Zylinders (196) des Ventilelements (108) angeordnet ist, wobei der Schaft einen Kopf mit einem Fuß (204) des Halters (112) verbindet,
wobei ein Vorspannelement (128) betriebsfähig zwischen dem Kopf des Halters (112) und einem Sitz (192) gekoppelt ist, der an dem Schaft (188) ausgebildet ist, und wobei der Zylinder (196) des Ventilelements (108) an dem Kopf des Halters (112) anliegt.

6. Ventilanordnung (100,312) nach Anspruch 5, wobei eine Dichtung (276) zwischen einem inneren Rand des Körpers (104) und einem Abschnitt des Ventilelements (108) angeordnet ist.

7. Ventilanordnung (100,312) nach Anspruch 6, wobei die Dichtung (276) so konfiguriert ist, dass sie an dem inneren Rand des Körpers (104) gehalten wird, sodass sich das Ventilelement (108) in Bezug auf die Dichtung (276) während des Betriebs bewegt, oder wobei die Dichtung (276) so konfiguriert ist, dass sie an dem Ventilelement (108) gehalten wird, sodass sich die Dichtung (276) in Bezug auf den Körper (104) während des Betriebs bewegt.

8. Ventilanordnung (100,312) nach Anspruch 5, wobei ein Isolator (788) so konfiguriert ist, dass er zwischen dem Körper (104) und einer Packwand des Batteriepacks angeordnet ist, oder wobei eine Dichtung (276) zwischen dem Ventilelement (108) und dem Fuß (204) des Halters (112) angeordnet ist.

9. Ventilanordnung (100,312) für einen Batteriepack nach Anspruch 1, wobei
der Körper (104) einen Flansch (148) aufweist, der sich von einer äußeren Seitenwand (156) an einem ersten Ende erstreckt, die Ventilanordnung (100,312) aufweisend:
eine innere Seitenwand (164), die eine Kammer (172) definiert, und eine Platte (180), die zwischen dem ersten Ende (140) und einem zweiten Ende (144) angeordnet ist, wobei die Platte (180) eine Vielzahl von Schlitzen beinhaltet, die durch sie hindurch ausgebildet sind, und wobei der Körper (104) eine einheitliche Komponente ist, die aus einem Metallmaterial ausgebildet ist;
das Ventilelement (108) mit dem ersten Ende (140) des Körpers (104) betriebsfähig gekoppelt ist;
ein Dichtungselement (276), das zwischen einem Abschnitt des Ventilelements (108) und dem Körper (104) angeordnet ist;
den Halter (112), wobei der Halter (112) mittig im Körper (104) angeordnet ist und so konfiguriert ist, dass er das Ventilelement (108) mit dem Körper (104) verbindet; und
ein Vorspannelement (128).

10. Ventilanordnung (100,312) nach Anspruch 9, wobei die Ventilanordnung (100,312) eine Membran (224) aufweist, die an mindestens einem von dem Halter (112) oder dem Körper (104) angebracht ist, wobei die Membran (224) so konfiguriert ist, dass sie eine passive Druckentlastung bereitstellt, wenn sich das Ventilelement (108) in einer geschlossenen Position befindet.

11. Ventilanordnung (100,312) nach Anspruch 10, wobei die Membran (224) mit einem Kopf des Halters (112) in der Nähe des zweiten Endes des Körpers (104) gekoppelt ist und wenigstens teilweise einen Kanal abdeckt, der durch den Halter (112) gebildet ist, oder wobei die Membran (224) mit einem Fuß (204) des Halters (112) in der Nähe des ersten Endes (140) des Körpers (104) gekoppelt ist und wenigstens teilweise einen Kanal abdeckt, der durch den Halter (112) gebildet ist.

12. Ventilanordnung (100,312) nach Anspruch 11, wobei die Membran (224) an dem Halter (112) durch einen ringförmigen Clip befestigt ist.

13. Ventilanordnung (100,312) nach Anspruch 12, wobei die Membran (224) um eine Vielzahl von Öffnungen (344) herum angeordnet ist, die durch die innere Seitenwand des Körpers (104) hindurch ausgebildet sind, wobei die Membran (224) innerhalb eines Spalts angeordnet ist, der in Fluidverbindung mit der Kammer (172) des Körpers (104) steht.

## Revendications

1. Ensemble vanne (100,312) pour un bloc-batterie, comprenant :
un corps (104) qui comporte une première extrémité (140) qui est opposée à une deuxième extrémité (144) et définit un axe central (116) à travers celui-ci ;
un élément vanne (108) ayant un rebord (280) qui est accouplé fonctionnellement à la première extrémité (140) du corps (104) et un cylindre (196) qui s'étend vers la deuxième extrémité (144) du corps (104), l'élément vanne (108) et le corps (104) étant alignés coaxialement le long de l'axe central (116) ; et
un dispositif de retenue (112) qui s'étend à travers le cylindre (196) et accouple l'élément vanne (108) au corps (104), dans lequel le corps (104) comporte une pluralité d'évents (184) qui sont sélectivement ouverts ou fermés par déplacement de l'élément vanne (108) par rapport à la première extrémité (140) du corps (104), **caractérisé en ce que** le corps (104) comporte une pluralité de languettes (336) agencées sur une paroi latérale externe (156), chaque languette (336) s'étendant vers l'extérieur à partir de la paroi latérale externe (156) par rapport à l'axe central (116), chaque languette (336) ayant une portion articulation (340) autour de laquelle la languette (336) est configurée pour être amenée à tourner pendant l'installation du corps (104) avec une paroi de bloc (120) du bloc-batterie, et éventuellement dans lequel la pluralité de languettes (336) sont formées d'un seul tenant avec le corps (104) sous la forme d'une structure unitaire.

2. Ensemble vanne (100,312) selon la revendication 1, dans lequel la pluralité d'évents (184) varient en taille les uns par rapport aux autres, ou dans lequel la pluralité d'évents (184) sont espacés radialement autour de l'axe central (116).

3. Ensemble vanne (100,312) selon la revendication 1, dans lequel le corps (104) comporte une paroi latérale interne (164) qui définit une chambre (172), un écartement annulaire entre une paroi latérale externe (156) et la paroi latérale interne (164), et une tige (188) qui est configurée pour guider le cylindre (196) de l'élément vanne (108) pendant le fonctionnement, et dans lequel le corps (104) est formé d'un seul tenant sous la forme d'une structure unitaire.

4. Ensemble vanne (100,312) selon la revendication 1, dans lequel un élément de sollicitation (128) est relié au dispositif de retenue (112) pour avoir une précharge de tension qui est réglée par compression axiale du dispositif de retenue (112).

5. Ensemble vanne (100,312) selon la revendication 1, dans lequel le corps (104) définit un axe central (116), le corps (104) comportant une plaque (180) qui est disposée entre la première extrémité (140) et la deuxième extrémité (144), la pluralité d'évents (184) étant formés à travers la plaque (180) et une tige (188) qui est disposée centralement sur la plaque (180) ;
l'élément vanne (108) étant fixé fonctionnellement à la première extrémité (140) du corps (104), l'élément vanne (108) ayant un cylindre (196) qui s'étend vers la deuxième extrémité (144) du corps (104) ; et
le dispositif de retenue (112) ayant un arbre disposé au sein du cylindre (196) de l'élément vanne (108), l'arbre reliant une tête à un pied (204) du dispositif de retenue (112),
dans lequel un élément de sollicitation (128) est accouplé fonctionnellement entre la tête du dispositif de retenue (112) et un siège (192) formé sur la tige (188), et dans lequel le cylindre (196) de l'élément vanne (108) vient en butée contre la tête du dispositif de retenue (112).

6. Ensemble vanne (100,312) selon la revendication 5, dans lequel un joint (276) est disposé entre un rebord interne du corps (104) et une portion de l'élément vanne (108).

7. Ensemble vanne (100,312) selon la revendication 6, dans lequel le joint (276) est configuré pour être retenu sur le rebord interne du corps (104), de sorte que l'élément vanne (108) se déplace par rapport au joint (276) pendant le fonctionnement, ou dans lequel le joint (276) est configuré pour être retenu sur l'élément vanne (108), de sorte que le joint (276) se déplace par rapport au corps (104) pendant le fonctionnement.

8. Ensemble vanne (100,312) selon la revendication 5, dans lequel un isolant (788) est configuré pour être disposé entre le corps (104) et une paroi de bloc du bloc-batterie, ou dans lequel un joint (276) est disposé entre l'élément vanne (108) et le pied (204) du dispositif de retenue (112).

9. Ensemble vanne (100,312) pour un bloc-batterie selon la revendication 1, dans lequel
le corps (104) a une bride (148) s'étendant à partir d'une paroi latérale externe (156) au niveau d'une première extrémité, l'ensemble vanne (100,312) comprenant :
une paroi latérale interne (164) qui définit une chambre (172), et une plaque (180) disposée entre la première extrémité (140) et une deuxième extrémité (144), dans lequel la plaque (180) comporte une pluralité de fentes formées à travers elle, et dans lequel le corps (104) est un composant unitaire formé d'un matériau métallique ;
l'élément vanne (108) étant accouplé fonctionnellement à la première extrémité (140) du corps (104) ;
un élément d'étanchéité (276) disposé entre une portion de l'élément vanne (108) et le corps (104) ;
le dispositif de retenue (112), dans lequel le dispositif de retenue (112) est disposé centralement dans le corps (104) et est configuré pour relier l'élément vanne (108) au corps (104) ; et
un élément de sollicitation (128).

10. Ensemble vanne (100,312) selon la revendication 9, dans lequel l'ensemble vanne (100,312) comporte une membrane (224) fixée au dispositif de retenue (112) et/ou au corps (104), la membrane (224) étant configurée pour fournir une décharge de pression passive lorsque l'élément vanne (108) est dans une position fermée.

11. Ensemble vanne (100,312) selon la revendication 10, dans lequel la membrane (224) est accouplée à une tête du dispositif de retenue (112) à proximité de la deuxième extrémité du corps (104) et recouvre au moins partiellement un canal formé à travers le dispositif de retenue (112), ou dans lequel la membrane (224) est accouplée à un pied (204) du dispositif de retenue (112) à proximité de la première extrémité (140) du corps (104) et recouvre au moins partiellement un canal formé à travers le dispositif de retenue (112).

12. Ensemble vanne (100,312) selon la revendication 11, dans lequel la membrane (224) est arrimée au dispositif de retenue (112) par une attache annulaire.

13. Ensemble vanne (100,312) selon la revendication 12, dans lequel la membrane (224) est disposée autour d'une pluralité d'ouvertures (344) formées à travers la paroi latérale interne du corps (104), la membrane (224) étant agencée au sein d'un écartement qui est en communication fluidique avec la chambre (172) du corps (104).
